# EUROPEAN PATENT SPECIFICATION

(11) **EP 2 958 748 B1**
(45) Date of publication and mention of the grant of the patent: **07.03.2018**
(21) Application number: 14703851.7
(22) Date of filing: 11.02.2014
(51) Int. Cl.: B32B 15/01, B32B 15/16

(54) **CLAD AUTOMOTIVE BODY PANEL WITH SHARP CHARACTER LINES**
PLATTIERTE AUTOMOBILKAROSSERIETAFEL MIT KLAREN CHARAKTERLINIEN
PANNEAU DE CARROSSERIE AUTOMOBILE PLAQUÉE AVEC LIGNES DE CARACTÈRES POINTUES

(30) Priority: 19.02.2013 EP 13155727
(43) Date of publication of application: 30.12.2015
(73) Proprietor: Aleris Aluminum Duffel BVBA, 2570 Duffel (BE); Audi AG, 85045 Ingolstadt (DE)
(72) Inventor: SMEYERS, Axel Alexander Maria, B-2220 Heist op den Berg (BE); HECHT, Joachim, 90765 Fürth (DE)
(74) Representative: Müller Schupfner & Partner Patent- und Rechtsanwaltspartnerschaft mbB
(86) International application number: PCT/EP2014/052632
(87) International publication number: WO 2014/128023

(56) References cited:
- EP-A1- 1 852 250
- FR-A1- 2 922 222
- US-A1- 2007 137 738

## Description

### FIELD OF THE INVENTION

This invention relates to an automotive body panel made out of an aluminium composite sheet material having a sufficient strength giving a good dent resistance in combination with a an excellent outer body surface appearance and allowing to make sharp character lines.

### BACKGROUND TO THE INVENTION

As will be appreciated herein below, except as otherwise indicated, aluminium alloy designations and temper designations refer to the Aluminum Association designations in Aluminum Standards and Data and the Registration Records, as published by the Aluminum Association in 2013.

For any description of alloy compositions or preferred alloy compositions, all references to percentages are by weight percent unless otherwise indicated.

For this invention "sheet product" refers to a rolled product form over 0.15 mm through 2.5 mm in thickness with sheared, slit or sawed edges.

For this invention "automotive body sheet" refers to aluminium alloy sheet for automotive body applications, for example exterior panels, interior panels and structural parts.

Automotive panels or automotive body panels generally include an outer panel and an inner panel. These outer and inner panels must achieve certain properties. More specific, an outer panel generally must meet adequate hem rating, sufficient strength after a paint-bake cycle for dent resistance, very good painted surface quality such as free of roping, and overall good formability, among other factors. The US patent application No. 2007/0137738 teaches a car body part of sheet metal of an aluminium alloy type AlMgSi, and a car body or component of a car body with at least one first component of sheet metal of a first aluminium alloy and at least one second component of sheet metal of a second aluminium alloy, where the first and second aluminium alloys are of the type AlMgSi, and after artificial ageing of the body or body part, the second component in comparison with the first component has lower mechanical strength values. To give modern cars a specific brand related design, it becomes more and more important to be able to produce outer body panels with sharp character lines. Such sharp character lines can already be achieved with different steel grades. However, due to the weight savings that are required to diminish the CO₂ emissions below the allowed national and international levels, it's preferred or even necessary to use aluminium outer body panels and it's still a big challenge to produce aluminium outer body panels with sharp character lines. The European patent application EP 1 852 250 A1 concerns a clad sheet product in tended for use as an automotive body sheet. The composite sheet comprises a core sheet and a cladding layer one one or both cores sheet surfaces. The core sheet comprises an aluminum alloy of the AA6000 series alloys and at least one cladding layer consists of an aluminium alloy of the AA6000 series alloys having a Cu-content of less than 0.25 wt.% Cu.

### DESCRIPTION OF THE INVENTION

An object of the invention is to provide an automotive body panel made of an aluminium composite sheet material, which delivers a required final yield strength of at least 160 MPa, preferably at least 180 MPa after the forming operation(s) and the paint bake cycle(s), an A-class surface appearance and excellent corrosion resistance, in combination with a very good ductility which not only gives a good deep drawing behaviour and stretch forming behaviour but more specifically allows achieving sharp character lines. In addition, this composite sheet material gives an excellent hemming behaviour and generates an A-class surface on the hemmed radii.

This and other objects and further advantages are met or exceeded by the present invention providing the use of a composite sheet material or composite sheet product made from 2 or 3 layers, i.e. a core layer and a thinner clad layer on one or both sides.

The core layer consists of a 6xxx aluminium grade with a chemical composition which gives the combination of a yield strength of at least 180 MPa, preferably at least 195 MPa, more preferably at least 210 MPa, after the forming operation(s) and the paint bake cycle(s) and with a thermo-mechanical processing that ensures an A-class roping and Wolkenbildung appearance.

The clad layer consists also of an aluminium grade but with a maximum yield strength of 145 MPa, preferably maximum 130 MPa, after the forming operation(s) and the paint bake cycle(s).

Besides this low(er) strength, it's very important that the thickness of this clad layer is at least 14%, preferably at least 18% of the total gauge of the composite sheet material. Due to the fact that both layers get the same thermo-mechanical processing, also the clad layer will have an A-class roping and Wolkenbildung appearance.

This combination of two quite different aluminium grades also ensures a very good hemming behaviour which is very important for outer body parts. A correct chosen chemical composition for both layers also ensures excellent corrosion behaviour.
In first instance, this specific composite sheet material should allow to produce outer body parts with character lines with an outer radius less than 4.5 mm, preferably less than 3.0 mm, by only using 1 or more cold drawing steps.

Moreover, using the composite sheet material according to the present invention in combination with special forming processes, such as half warm forming and local reversion annealing applied to the composite material before or in between deep drawing steps, also leads to an improved formability compared to the one that can be achieved with mono sheet 6xxx qualities and other aluminium composite materials.

According to the invention, the core layer of the composite sheet with the higher strength is made from an aluminium 6xxx alloy having a composition consisting of, in wt.%,

| | |
|---|---|
| Si | 0.8 to 1.3, preferably 0.90 to 1.2, more preferably 0.95 to 1.2, |
| Mg | 0.4 to 0.7, preferably 0.5 to 0.65, |
| Cu | < 0.25, preferably <0.1, |

optionally one or more elements selected from the group consisting of:
(Ti < 0.15, Fe < 0.4, Mn < 0.3, Cr < 0.15, Zr, < 0.15, Zn < 0.2),
other elements (or unavoidable impurities) each <0.05, total <0.2, and balance aluminium.

According to the invention, the clad layer of the composite sheet with the low strength is made from an aluminium 6xxx alloys having a chemical composition consisting of, in wt.%,

| | |
|---|---|
| Si | 0.8 to 1.3, preferably 0.9 to 1.2, more preferably 0.95 to 1.2, |
| Mg | < 0.4, preferably< 0.3, |
| Cu | < 0.25, preferably< 0.1, |

optionally one or more elements selected from the group consisting of:
(Ti < 0.15, Fe < 0.4, Mn < 0.3, Cr < 0.15, Zr < 0.15, Zn < 0.2),
other elements and unavoidable impurities each <0.05, total <0.2, and balance aluminium, wherein the clad material has a thickness of at least 14% of the total gauge of the composite sheet material, and wherein the core material has a yield strength of at least 180 MPa and the clad material has a max. yield strength of 145 MPa, after the forming operation(s) and paint bake cycle(s).

In an embodiment of the invention, the aluminium composite sheet material is used as an automotive door outer panel, trunk lid outer panel or outer side panel.

The composite sheet product in accordance with the present invention may comprise only one clad sheet applied to only one side of the core material. In another embodiment of the invention, the composite sheet consists of a high strength core material having a low strength clad material on both sides of the core material. It is important that the clad layers have a minimum thickness of at least 14%, preferably at least 18% of the total gauge of the composite material.

The aluminium composite sheet product can be formed (e.g. by means of stamping, deep drawing, pressing, press forming, and roll forming, either at ambient or at elevated temperature) into automotive body parts, in particular to (nonleod bearing) closures like door outer panels, side panels, outer hoods, and trunk lid outer panels.

Although the dimensions of the aluminium composite material can be varied in many ways (mostly imposed by the specific use and concurrent demands), for use as automotive body panels the composite sheet material, i.e. the core and all clad layers together, has a thickness in the range of about 0.5 to 2 mm, preferably about 0.5 to 1.5 mm, and most preferably about 0.7 to 1.3 mm.

In an embodiment the defined clad sheet is attached to the core material by means of roll bonding to achieve the required metallurgical bonding between the core sheet and the cladding. Such a roll bonding process is very economic and results in a very effective composite sheet material presenting the desired properties. Of course, the roll bonding process may be accompanied by several additional processing steps such as for example annealing for determining the final properties of the automotive body sheet in the form of the composite sheet material. When carrying out such a roll-bonding process for producing the composite sheet material according to the present invention, it is preferred that both the core material and clad sheet experience a thickness reduction during the role bonding.

In an alternative embodiment of the invention, the composite sheet material is produced by means of multi-alloy casting techniques, for example as disclosed in patent documents WO-2004/112992, WO-2010/000553, and WO-2010/114740, incorporated herein by reference, and following casting of ingot material it is subsequently processed by rolling to thinner gauge material.

If desired it is also possible that the heat treated and cooled composite sheet material receives a controlled amount of stretching, typically in a range of about 0.2% to about 4%, to increase the flatness of the sheet product prior to any subsequent forming operation.

Following the heat treatment, cooling and optional stretching, the aluminium composite sheet material can be formed into the three-dimensional formed automotive body panel. The forming operation can be any forming operation used to shape three-dimensional motor vehicle components, and includes in particular operations like stamping, deep drawing, pressing, press forming, and roll forming, either at ambient or at elevated temperature.

Before forming, the aluminium composite sheet material may be coated with a lubricant, oil or dry lubricant, suitable for the forming operation, the assembly and the surface treatment of the structural part to be produced.

Typically following the forming operation the formed part is made part of an assembly of other metal components as is regular in the art for manufacturing vehicle components, and subjected to a paint bake operation to cure any paint or lacquer layer applied. Such a treatment is in the art designated by the terms "paint-bake" or "paint-baking", and going through such a treatment is designated in the art by the term "paint-bake cycle". During the paint bake cycle both formed aluminium alloy layers achieve their desired final strength levels. The paint bake operation or paint bake cycle typically comprises one or more sequential short heat treatments in the range of about 140°C to 200°C for a period of about 10 to less than 40 minutes, and typically of less than 30 minutes. A typical paint bake cycle would comprise a first heat treatment of about 180°C at 20 minutes, cooling to ambient temperature, then about 160°C at 20 minutes and cooling to ambient temperature. In dependence of the manufacturer (OEM) such a paint bake cycle may comprise of 2 to even up to 5 sequential steps and includes drying steps.

Achieving sharp radii with aluminium sheets in T4 temper mostly becomes very difficult when outer body panels need to be produced due to the fact that achieving outer body panels with the required surface quality, stiffness and shape or dimensional accuracy requires significant stretch forming during pressing.

However, by using the composite sheet material of the present invention it is possible to produce outer body parts with sharp character lines.

The invention is now further described with reference to the accompanying figures, in which:
- Fig. 1:: illustrates the principal shape of a door outer panel with two character lines.
- Fig. 2:: shows two different diagrams of the section of a composite sheet according to the prior art at a sharp character line.
- Fig.3:: shows three different embodiments of the composite sheet material according to the present application, i.e. Variants A, B and C and one sheet according to the prior art in a stretch bend forming process.
- Fig. 4:: shows a finite element analysis (FEA) under combined stretch bending of Variants A, B and C and the monolithic reference of Fig. 3.
- Fig. 5:: shows three different embodiments of the composite sheet material according to the present application, i.e. Variants A, B and C and one sheet according to the prior art in a hemming process.
- Fig. 6:: shows a finite element analysis ("FEA") in the hemming process of Variants A, B and C and the monolithic reference of Fig. 5.
- Fig. 7:: shows the plastic equivalent strain values in the hemming process of Variants A, B and C and the monolithic reference of Fig. 5.

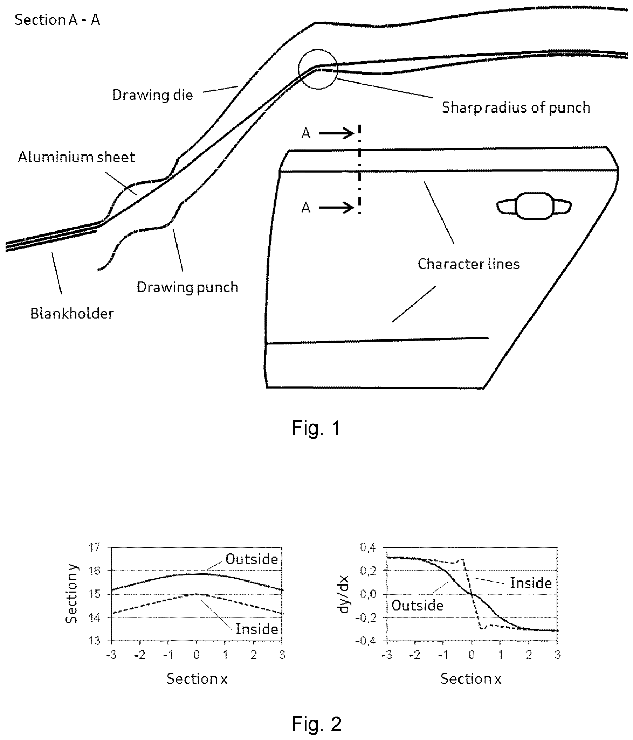

Fig. 1 shows a simplified model of a stretch forming process according to the prior art. This stretch forming process is implemented by a blankholder, locking all areas of the sheet encompassing the drawing punch zone. As a consequence no draw in of material is possible and sharp radii, i.e. R1, as illustrated in the cross-section of the image, impose a high degree of contact pressure on the aluminium sheet surface.
The local superposition of high contact pressure and the general prevailing amount of tensile stress in the neutral membrane of the sheet leads to a loss of sharpness at the visible outer side of the aluminium part.

Fig. 2 shows on the left side a diagram for a section (in x/y-direction) of a prior art sheet at a sharp character line. It becomes obvious that the curvature of the outer face is significantly lower than the offset (amount of sheet thickness) of the inner curvature is expected. On the right side of Fig. 2 another diagram is shown wherein the section x is plotted against the derivative dx/dy. The derivative of the sectional curvature emphasizes that the directional change occurs along the interior face of the sheet within a shorter sectional length than on the exterior one. This can be defined as a visible loss of striking sharpness in comparison to the geometry of the forming tool.

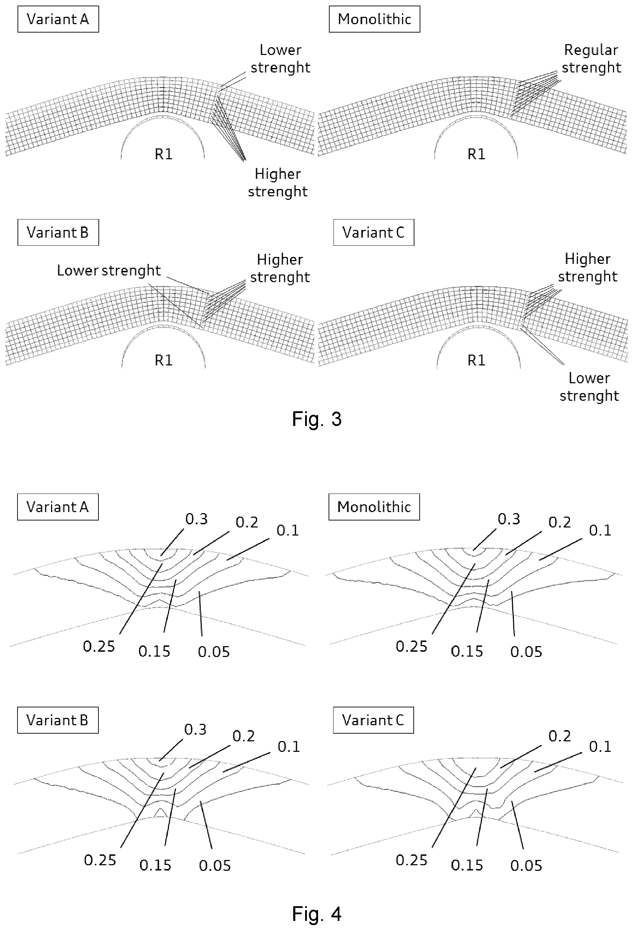

Fig. 3 shows a monolithic reference, i.e. a sheet material according to the prior art, in comparison with three different embodiments of the composite sheet material according to the present invention, i.e. Variants A, B and C, in a stretch bend forming process, i.e. in contact with a stamp (R1).

In Variant A the core material having a higher yield strength makes contact with the sharp radius of the stamp (R1). In this case, the stresses in the outer layer of the clad layer having lower yield strength will be high but the clad alloy can cope with those stresses and the clad layer has the beneficial effect that it reduces the crack sensitivity of the most stretched outer layer of the core material of the composite sheet.
In Variant B the composite sheet material according to the present invention has clad layers on both surfaces of the core material. Thus, one clad layer is in contact with the sharp radius of the stamp (R1). Since the clad layer having lower yield strength is added to both surfaces of the sheet the beneficial effect of Variant A is given to a certain degree as the thickness of the clad layers is smaller than in Variant A.
Variant C shows the composite sheet material according to the present invention wherein the clad layer makes contact with the sharp radius of the stamp (R1). In this variant the stresses that are being introduced into the composite sheets by the sharp radius of the stamp are diminished by the clad layer which leads to also lower stresses in the outer (most heavily stretched) core layer of the composite sheet.

Fig. 4 shows by means of finite element analysis the different stress levels after combined stretch bending shown in Fig. 3. In this embodiment the thickness of the core layer is about 0.84 mm and the thickness of the clad layer is about 0.20 mm for Variants A and B. For Variant C the core layer is about 0.84 mm and both cladding layers have a thickness of 0.10 mm. The monolithic case is used as reference (state of the art) and shows local plastic equivalent strain values higher than 0.3 for the outer cross sectional zone in the forming condition illustrated in Fig. 3.
The cross sectional zones next to the punch show values beneath 0.05. In contrast, Variant C reaches values higher than 0.05 for this zone, since the yield strength of the clad layer is lower. The beneficial effect is that the plastic equivalent strain of the outer cross sectional zone decreases beneath 0.3. As a result the probability for a crack initiation as well as for a decrease of the local surface quality is reduced.

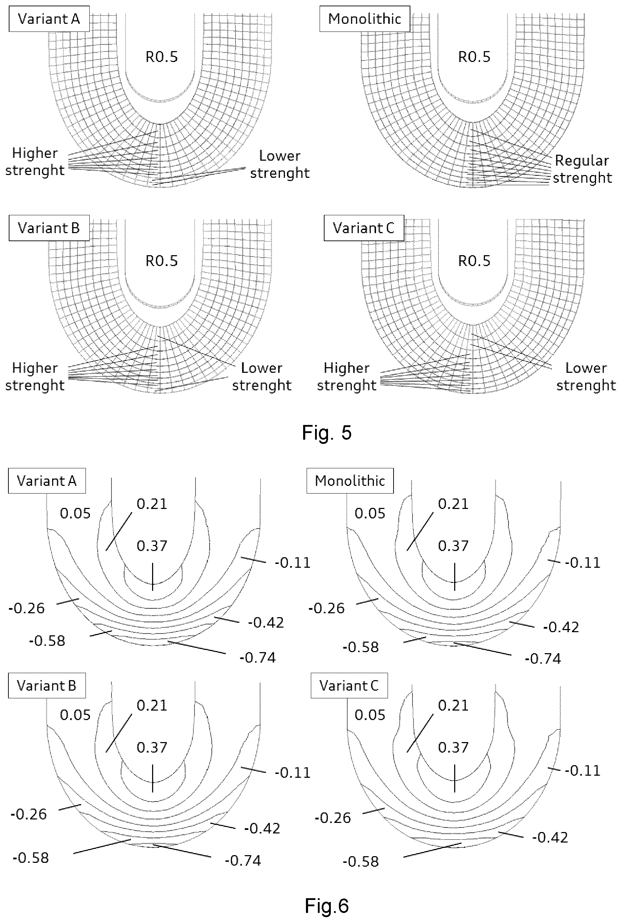

Fig. 5 shows a monolithic reference, i.e. a sheet material according to the prior art, in comparison with different embodiments of the composite sheet material according to the present invention, i.e. Variants A, B and C in a hemming process. Hemming around an inner part of similar sheet thickness causes radii in the amount of one half of the thickness, thus meaning approximately R0.5 for prior art gauges of more or less 1 mm for outer skin panels. In contrast to the stretch bending forming process described in Fig. 3, the neutral membrane of the sheet is not subject to an additional tensile stress. Typically the inner cross sectional zones show a high degree of compressive strain while the outer cross sectional zones are stretched heavily. The different levels of yielding strength initiate a comparable effect in the cross section during hemming as already described for the stretch bending mode (see Fig. 4).

Fig. 6 shows by means of finite element analysis that the distribution of the strain in normal direction, representing thinning, respectively thickening, is affected by the clad layer in Variant C. The zone featuring compression values of 0.37 and higher, increases in size, whereas the outer zone featuring thinning values of -0.74 and even lower disappears.

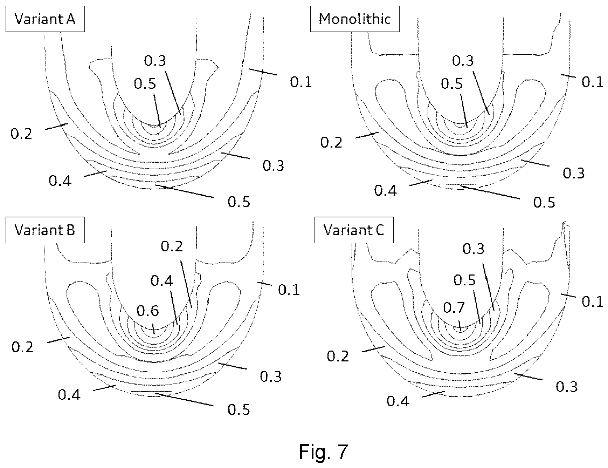

Fig. 7 shows the distribution of plastic equivalent strain values in the hemming process. In comparison to the monolithic reference, Variant C shifts the higher levels of strain from the outer zones to the inner one. In detail, the tensile dominated strain value for the outer zone is reduced from 0.5 to 0.4 whereas the compressive dominated value in the centre of the hemming increases to values of 0.7 and higher. However, the latter one is no risk for failure since the stress condition is of compressive character, thus unsuitable neither for crack initiation nor for their expansion. More important is the releasing effect for the outer surface, leading to a reduction or elimination of the typical surface roughening that occurs with aluminium at sharp edges and visual surface imprints as a consequence of the hemming. Variant B shows a similar effect, however at lower level than Variant C. Variant A has to face a negative effect, since the zone of tensile dominated values of 0.5 increases in size.

The invention is not limited to the embodiments described before and may be varied widely within the scope of the invention as defined by the appending claims.

## Claims

1. Automotive body sheet in the form of an aluminium composite sheet material wherein a clad material is applied to at least one side of a core material, and wherein the core material consists of an aluminium 6xxx alloy having the following composition, in wt.%,
| | |
|---|---|
| Si | 0.8 to 1.3, |
| Mg | 0.4 to 0.7, |
| Cu | < 0.25, |
optionally one or more elements selected from the group consisting of:
(Ti < 0.15, Fe < 0.4, Mn < 0.3, Cr <0.15, Zr <0.15, Zn < 0.2),
other elements and unavoidable impurities each <0.05, total <0.2, and balance aluminium,
and wherein the clad material is an aluminium 6xxx alloy having the following composition, in wt.%,
| | |
|---|---|
| Si | 0.8 to 1.3, preferably 0.9 to 1.2, |
| Mg | < 0.4, preferably < 0.3, |
| Cu | < 0.25, preferably < 0.1, |
optionally one or more elements selected from the group consisting of:
(Ti < 0.15, Fe < 0.4, Mn < 0.3, Cr <0.15, Zr <0.15, Zn < 0.2),
other elements and unavoidable impurities each <0.05, total <0.2, and balance aluminium,
wherein the clad material has a thickness of at least 14% of the total gauge of the composite sheet material, and wherein the core material has a yield strength of at least 180 MPa and the clad material has a max. yield strength of 145 MPa, after the forming operation(s) and the paint bake cycle(s).

2. Sheet material according to claim 1, wherein the clad material has a thickness of at least 18% of the total gauge of the composite material.

3. Sheet material according to claim 1 or 2, wherein the core material has a yield strength of at least 210 MPa, after the forming operation(s) and the paint bake cycle(s).

4. Sheet material according to any of the previous claims 1 to 3, wherein the clad material has a max. yield strength of 130 MPa, after the forming operation(s) and the paint bake cycle(s).

5. Sheet material according to any of the previous claims 1 to 4, wherein the core material has a Si-content of 0.90 to 1.2 wt.%, preferably 0.95 to 1.2 wt.%.

6. Sheet material according to any of the previous claims 1 to 5, wherein the core material has a Mg-content of 0.5 to 0.65 wt.%.

7. Sheet material according to any of the previous claims 1 to 6, wherein the core material has a Cu-content of less than 0.1 wt.%.

8. Sheet material according to any of the previous claims 1 to 7, wherein the composite sheet material consists of a core material having a clad sheet on one side only.

9. Sheet material according to any of the previous claims 1 to 7, wherein the composite sheet material consists of a core material having a clad sheet on both sheet surfaces.

10. Sheet material according to any of the previous claims 1 to 9, wherein the total thickness of the composite sheet material is in the range of 0.5 to 2 mm, preferably in the range of 0.5 to 1.5 mm, and more preferably in the range of 0.7 to 1.3 mm.

11. Automotive body panel made from the automotive body sheet according to any one of claims 1 to 10.

12. Automotive body panel according to claim 11, wherein the automotive body panel is selected from a door outer panel, a trunk lid outer panel or an outer side panel.

## Patentansprüche

1. Automobilkarosserieblech in der Form eines Aluminiumverbundblechmaterials, wobei ein Plattiermaterial auf zumindest einer Seite eines Kernmaterials aufgebracht ist, und wobei das Kernmaterial aus einer Aluminium 6xxx Legierung besteht, die die folgende Zusammensetzung in Gewichtsprozent aufweist:
Si 0,8 bis 1,3
Mg 0,4 bis 0,7
Cu < 0,25,
optional ein oder mehrere Elemente ausgewählt aus der Gruppe bestehend aus:
(Ti < 0,15, Fe < 0,4, Mn < 0,3, Cr < 0,15, Zr < 0,15, Zn < 0,2),
andere Elemente und unvermeidbare Verunreinigungen jeweils < 0,05, gesamt < 0,2 und Rest Aluminium,
und wobei das Plattiermaterial eine Aluminium 6xxx Legierung ist, die die folgende Zusammensetzung in Gew.-% aufweist,
Si 0,8 bis 1,3, bevorzugt 0,9 bis 1,2
Mg < 0,4 bevorzugt < 0,3
Cu < 0,25 bevorzugt < 0,1
optional ein oder mehrere Elemente ausgewählt aus der Gruppe bestehend aus:
(Ti < 0,15, Fe < 0,4, Mn < 0,3, Cr < 0,15, Zr < 0,15, Zn < 0,2),
andere Elemente und unvermeidbare Verunreinigungen jeweils < 0,05, gesamt < 0,2 und Rest Aluminium,
wobei das Plattiermaterial eine Dicke von zumindest 14% der gesamten Dicke des Verbundblechmaterials hat, und wobei das Kernmaterial eine Streckgrenze von zumindest 180 MPa aufweist und das Plattiermaterial eine maximale Streckgrenze von 145 MPa aufweist, nach dem oder den Umformvorgängen und dem oder den Lackeinbrennzyklen,

2. Blechmaterial gemäß Anspruch 1, wobei das Plattiermaterial eine Dicke von zumindest 18% der genannten Dicke des Verbundmaterials aufweist.

3. Blechmaterial gemäß den Ansprüchen 1 oder 2, wobei das Kernmaterial eine Streckgrenze von zumindest 210 MPa aufweist, nach dem oder den Umformvorgängen und dem oder den Lackeinbrennzyklen.

4. Blechmaterial gemäß einem der vorherigen Ansprüche 1 bis 3, wobei das Plattiermaterial eine maximale Streckgrenze von 130 MPa aufweist, nach dem oder den Umformvorgängen und dem oder den Lackeinbrennzyklen.

5. Blechmaterial gemäß einem der vorgehenden Ansprüche 1 bis 4, wobei das Kernmaterial einen Si-Gehalt von 0,90 bis 1,2 Gew.-% aufweist, bevorzugt 0,95 bis 1,2 Gew.-%.

6. Blechmaterial gemäß einem der vorhergehenden Ansprüche 1 bis 5, wobei das Kernmaterial einen Mg-Gehalt von 0,5 bis 0,65 Gew.-% aufweist.

7. Blechmaterial gemäß einem der vorhergehenden Ansprüche 1 bis 6, wobei das Kernmaterial einen Cu-Gehalt von weniger als 0,1 Gew.-% aufweist.

8. Blechmaterial gemäß einem der vorhergehenden Ansprüche 1 bis 7, wobei das Verbundblechmaterial aus einem Kernmaterial besteht, die ein Plattierblech auf nur einer Seite aufweist.

9. Blechmaterial gemäß einem der vorhergehenden Ansprüche 1 bis 7, wobei das Verbundblechmaterial aus einem Kernmaterial besteht, das eine Plattierschicht auf beiden Blechoberflächen aufweist.

10. Blechmaterial gemäß einem der vorhergehenden Ansprüche 1 bis 9, wobei die Gesamtdicke des Verbundblechmaterials in dem Bereich von 0,5 bis 2 mm ist, bevorzugt in dem Bereich von 0,5 bis 1,5 mm, und besonders bevorzugt in dem Bereich von 0,7 bis 1,3 mm.

11. Automobilkarosseriepaneel hergestellt aus einem Automobilkarosserieblech gemäß einem der Ansprüche 1 bis 10.

12. Automobilkarosseriepaneel gemäß Anspruch 11, wobei das Automobilkarosseriepaneel ausgewählt wird aus einem Türaußenpaneel, einem Kofferraumdeckelaußenpaneel oder einem äußeren Seitenpaneel.

## Revendications

1. Tôle de carrosserie automobile sous la forme d'un matériau de tôle composite en aluminium, dans lequel un matériau de plaquage est appliqué sur au moins une face d'un matériau d'âme, et dans lequel le matériau d'âme consiste en un alliage d'aluminium de la série 6xxx ayant la composition suivante, en % en poids,
| | |
|---|---|
| Si | 0,8 à 1,3, |
| Mg | 0,4 à 0,7, |
| Cu | < 0,25, |
en option un ou plusieurs éléments choisis parmi le groupe constitué par : (Ti < 0,15, Fe < 0,4, Mn < 0,3, Cr < 0,15, Zr < 0,15, Zn < 0,2),
d'autres éléments et impuretés inévitables chacun < 0,05 avec un total < 0,2, et le reste étant de l'aluminium,
et dans lequel le matériau de plaquage est un alliage d'aluminium de la série 6xxx ayant la composition suivante, en % en poids,
| | |
|---|---|
| Si | 0,8 à 1,3, de préférence 0,9 à 1,2, |
| Mg | < 0,4, de préférence < 0,3, |
| Cu | < 0,25, de préférence < 0,1, |
en option un ou plusieurs éléments choisis parmi le groupe constitué par : (Ti < 0,15, Fe < 0,4, Mn < 0,3, Cr < 0,15, Zr < 0,15, Zn < 0,2),
d'autres éléments et impuretés inévitables chacun < 0,05 avec un total < 0,2, et le reste étant de l'aluminium,
dans lequel le matériau de plaquage a une épaisseur d'au moins 14 % de l'épaisseur totale du matériau de tôle composite, et dans lequel le matériau d'âme a une limite d'élasticité d'au moins 180 MPa et le matériau de plaquage a une limite d'élasticité maximum de 145 MPa, après l'opération ou les opérations de formage et le cycle ou les cycles de cuisson de la peinture.

2. Matériau de tôle selon la revendication 1, dans lequel le matériau de plaquage a une épaisseur d'au moins 18 % de l'épaisseur totale du matériau composite.

3. Matériau de tôle selon la revendication 1 ou 2, dans lequel le matériau d'âme a une limite d'élasticité d'au moins 210 MPa, après l'opération ou les opérations de formage et le cycle ou les cycles de cuisson de la peinture.

4. Matériau de tôle selon l'une quelconque des revendications 1 à 3, dans lequel le matériau de plaquage a une limite d'élasticité maximum de 130 Mpa, après l'opération ou les opérations de formage et le cycle ou les cycles de cuisson de la peinture.

5. Matériau de tôle selon l'une quelconque des revendications 1 à 4, dans lequel le matériau d'âme a une teneur en Si de 0,90 à 1,2 % en poids, de préférence 0,95 à 1,2 % en poids.

6. Matériau de tôle selon l'une quelconque des revendications 1 à 5, dans lequel le matériau d'âme a une teneur en Mg de 0,5 à 0,65 % en poids.

7. Matériau de tôle selon l'une quelconque des revendications 1 à 6, dans lequel le matériau d'âme a une teneur en Cu inférieure à 0,1 % en poids.

8. Matériau de tôle selon l'une quelconque des revendications 1 à 7, dans lequel le matériau de tôle composite consiste en un matériau d'âme ayant une tôle plaquée sur une seule face.

9. Matériau de tôle selon l'une quelconque des revendications 1 à 7, dans lequel le matériau de tôle composite consiste en un matériau d'âme ayant une tôle plaquée sur les deux faces.

10. Matériau de tôle selon l'une quelconque des revendications 1 à 9, dans lequel l'épaisseur totale du matériau de tôle composite se trouve dans la plage de 0,5 à 2 mm, de préférence dans la plage de 0,5 à 1,5 mm, et de toute préférence dans la plage de 0,7 à 1,3 mm.

11. Panneau de carrosserie automobile fait à partir de la tôle de carrosserie automobile selon l'une quelconque des revendications 1 à 10.

12. Panneau de carrosserie automobile selon la revendication 11, dans lequel le panneau de carrosserie automobile est choisi parmi un panneau extérieur de porte, un panneau extérieur de capot de coffre ou un panneau latéral extérieur.
